(19) Europäisches Patentamt
European Patent Office
Office européen des brevets

(11) **EP 1 847 443 A2**

(12) **EUROPÄISCHE PATENTANMELDUNG**

(43) Veröffentlichungstag:
**24.10.2007 Patentblatt 2007/43**

(51) Int Cl.:
***B62D 13/00*** *(2006.01)*

(21) Anmeldenummer: 07106480.2

(22) Anmeldetag: **19.04.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **20.04.2006 DE 102006018391**

(71) Anmelder: **ZF Lenksysteme GmbH
73527 Schwäbisch Gmünd (DE)**

(72) Erfinder:
• **Braun, Andreas
73116 Wäschenbeuren (DE)**
• **Löffler, Hans-Peter
73577 Ruppertshofen (DE)**
• **Wahl, Gernot
73529 Schwäbisch Gmünd (DE)**
• **Lenhardt, Harald
89173 Lonsee (DE)**

(54) **Mehrachslenkanlage**

(57) Mehrachslenkungsanlage für ein Fahrzeuggespann beinhaltend wenigstens zwei Fahrzeugwagen (2a, 2b), (2b, 2c) und wenigstens ein Gelenk (7a, 7b) zur Verkoppelung zweier Fahrzeugwagen wobei wenigstens zwei Fahrzeugwagen jeweils eine Lenkachse (6) zur Radwinkelverstellung von mit der Lenkachse (6) in Wirkverbindung stehenden gelenkten Räder (11) aufweisen, dadurch gekennzeichnet, dass jeder Lenkachse (6) ein Lenkaktuator (3a, 3b, 3c) zur Radwinkelverstellung und eine Steuereinheit (8a, 8b, 8c) zur Steuerung und/oder Regelung der Lenkaktuatoren (3a, 3b, 3c) zugeordnet ist.

Fig. 1

EP 1 847 443 A2

**Beschreibung**

Die Erfindung betrifft eine Mehrachslenkanlage für ein Fahrzeuggespann gemäß dem Oberbegriff des Anspruchs 1 mit den Merkmalen des Anspruchs 1. Sie betrifft auch ein entsprechendes Verfahren für den Betrieb der erfindungsgemäßen Mehrachslenkanlage.

Die Erfindung betrifft eine Mehrachslenkungsanlage gemäß dem Oberbegriff des Anspruchs 1 sowie ein Verfahren zur Steuerung einer Mehrachslenkungsanlage gemäß des Anspruchs 9.

Bei bekannten mehrachsgelenkten Fahrzeugen mit mindestens zwei, jeweils einer Lenkachse zugeordneten Lenkaktuatoren sind die Lenkaktuatoren über eine mechanische und/oder hydraulische Kopplung miteinander verbunden, wodurch die Radeinschlagwinkel der Fahrzeugräder synchronisiert werden. Aus der DE 37 07 700 A1 ist es bekannt, die Lenkgestänge beider Lenkaktuatoren über Schubstangen miteinander zu koppeln. Die DE 195 10 208 A1 beschreibt dagegen eine Mehrachslenkungsanlage, bei der der erste Lenkaktuator ein hydraulisches Hauptlenkungsaggregat und der zweite Lenkaktuator ein hydraulisches Hilfslenkungsaggregat umfasst, wobei das Hilfslenkungsaggregat als Nehmerzylinder ausgebildet ist, der mit einem Geberzylinder der ersten Lenkungsanlage über eine hydrostatische Lenkkraftübertragungseinrichtung gekoppelt ist. Hauptlenkungsaggregat und Hilfslenkungsaggregat dienen zur Servounterstützung der vom Fahrer über die Lenkhandhabe initiierten Lenkbewegung. Eine Lenkbewegung am Lenkrad erzeugt eine Lenkbewegung oder Lenkwinkel am ersten Lenkaktuator, welche über die hydraulische Kopplung eine Lenkbewegung der des zweiten Lenkaktuators erzwingt. Bei den bekannten Mehrachslenkungsanlagen müssen die Längen der Radlenkhebel und der Lenkschubstangen so gewählt werden, dass die Radeinschlagwinkel der Ackermanngeometrie folgen, die gedachten Verlängerungen der Fahrzeugachsen sich also in einem gemeinsamen Momentanpol schneiden. Dies ist zweckmäßig, um den Reifenverschleiß so gering wie möglich zu halten und ein gutes Einlenkverhalten zu erzielen. In der Praxis werden jedoch Fahrzeuge derselben Grundbauart mit unterschiedlichen Radständen gebaut. Um der Ackermanngeometrie zu folgen, müssten für Fahrzeuge mit unterschiedlichen Radständen auch unterschiedlich bemessene Lenkschubstangen und Radlenkhebel vorgesehen werden. Hierauf wird jedoch häufig aus Kostengründen verzichtet und ein Fehler in der Ackermanngeometrie mit negativen Auswirkungen auf den Reifenverschleiß und das Einlenkverhalten in Kauf genommen.

Ein weiterer Nachteil der bekannten Mehrachslenkungsanlagen besteht darin, dass aufgrund der mechanischen und/oder hydraulischen Kopplung der zweiten Lenkungsanordnung und der ersten Lenkungsanordnung und der daraus resultierenden erzwungener Lenkbewegung des zweiten Lenkaktuators kein individueller Einfluss auf das Lenkverhalten des zweiten Lenkaktuators genommen werden kann.

Straßenfahrzeuge, beispielsweise ein Fahrzeuggespann, das aus mehreren Fahrzeugwagen besteht, beispielsweise aus einer Zugmaschine, einem Sattelschlepper oder einem Personenkraftwagen oder dem ersten Fahrzeugwagen eines ein- oder mehrgelenkigen Omnibusses und wenigstens einem weiteren Fahrzeugwagen, beispielsweise einem Anhänger oder Auflieger oder einem weiteren Wagenteil eines mehrgelenkigen Omnibusses, die mittels einer Einrichtung zur Koppelung, beispielsweise einem Drehteller, einer Anhängerkupplung oder einem Knickgelenk miteinander verbunden sind, besitzen keine optimale Fahrzeugführung in den Kurven, gemäß der aus dem Stand der Technik bekannten Ackermann-Beziehung. Aus diesem Grund ist ein vom Fahrzeuggespann eingenommener Fahrraum während einer Kurvenfahrt unter Umständen zu groß um gesetzliche Richtlinien oder die Verordnungen eines bestimmten Landes zu erfüllen.

Der Erfindung liegt die Aufgabe zugrunde, eine Mehrachslenkungsanlage in einem Fahrzeuggespann und ein Verfahren für den Betrieb einer Mehrachslenkungsanlage in einem Fahrzeuggespann anzugeben, welche es ermöglichen, dass die einzelnen Fahrzeugwagen eines Fahrzeuggespanns dem durch das Führungsfahrzeug vorgegebenen Radius beim Abbiegen oder in einer Kurvenfahrt besser folgen zu können.

Diese Aufgabe wird vorrichtungsgemäß mit den kennzeichnenden Merkmalen des Anspruchs 1 und verfahrensgemäß mit den kennzeichnenden Merkmalen des Anspruchs 9 gelöst. Vorteilhafte Ausgestaltungen der Erfindung sind in den abhängigen Ansprüchen angegeben.

In einer Mehrachslenkungsanlage für ein Fahrzeuggespann beinhaltend wenigstens zwei Fahrzeugwagen und wenigstens ein Gelenk zur Verkoppelung zweier Fahrzeugwagen wobei wenigstens zwei Fahrzeugwagen jeweils eine Lenkachse zur Radwinkelverstellung von mit der Lenkachse in Wirkverbindung stehenden gelenkten Räder aufweisen, ist vorgesehen, jeder Lenkachse ein Lenkaktuator zur Radwinkelverstellung und eine Steuereinheit zur Steuerung und/oder Regelung der Lenkaktuatoren zuzuordnen. Dies hat den Vorteil, dass die Radlenkwinkel an den gelenkten Achsen unabhängig voneinander gestellt werden können.

Als weitere Ausgestaltung der Erfindung ist vorgesehen, dass keine der Lenkaktuatoren eine mechanisch und/oder pneumatisch und/oder hydraulisch wirkende Verbindung zur Radwinkelverstellung zu einem einer anderen Lenkachse zugeordneten Lenkaktuator aufweist.

Des weiteten ist vorgesehen, Mittel zur Erfassung eines vom Führer des Fahrzeuggespanns beeinflussbaren Lenkwinkels sowie Mittel zur Zuführung der Lenkwinkelinformation an wenigstens eine Steuereinheit vorzusehen.

In einer weiteren Ausgestaltung der Erfindung sind Mittel zur Erfassung eines Knickwinkels zwischen zwei Fahrzeugwagen und Mittel zur Zuführung der Knickwinkelinformation an wenigstens eine Steuereinheit vorgesehen, wird als besonders vorteilhaft erachtet, einen berührungslos wirkenden Winkelsensor, im Wirkbereich des Gelenks anzuordnen.

Um einen Ausfall eines Lenkaktuators der Mehrachslenkungsanlage zu erkennen, ist in einer weiteren Ausführungsform vorgesehen, einem der Lenkaktuatoren oder im Wirkbereich einer dem Lenkaktuator zugeordneten Lenkachse Mittel zur Erkennung einer Funktionsstörung des entsprechenden Lenkaktuators, insbesondere ein Druck-Bewegungs- oder Positionssensoren, zuzuordnen.

Um bei einem Ausfall eines Lenkaktuators der Mehrachslenkungsanlage ein definiertes Fehlerverhalten zu gewährleisten ist vorgesehen, einem Lenkaktuator Mittel zur Aktivierung und Aufrechterhaltung eines Notlaufbetriebs im Falle einer erkannten Funktionsstörung zuzuordnen, welche Mittel zur Zentrierung der mit einer Lenkachse verbunden gelenkten Rädern in Geradeausstellung, entsprechend einem Radlenkwinkel von etwa 0°, vorsehen.

Erfindungsgemäß ist für den Betrieb einer Mehrachslenkungsanlage mit den Merkmalen des Anspruchs 1 ein Verfahren vorgesehen, welches die Sollvorgabe für die Radlenkwinkel der mit einer Lenkachse verbundenen gelenkten Räder nach Maßgabe der Lenkwinkelinformation ermittelt.

Die Bestimmung der Sollvorgabe erfolgt in einer Steuereinheit oder wird dieser zugeführt. Nach Maßgabe der Sollvorgabe wird eine dem Soll- Radlenkwinkel entsprechende Stellgröße ermittelt und einem einer Lenkachse zugeordneten Lenkaktuator zugeführt.

In einer weiteren Ausgestaltung des erfindungsgemäßen Verfahrens ist vorgesehen, die Sollvorgabe für die Radlenkwinkel der mit einer Lenkachse verbundenen gelenkten Räder im nach Maßgabe der Knickwinkelinformation vorzunehmen, wobei die Bestimmung der Sollvorgabe in einer Steuereinheit erfolgt oder die Sollvorgabe einer Steuereinheit zugeführt wird und nach deren Maßgabe eine dem Soll-Radlenkwinkel entsprechende Stellgröße ermittelt wird und einem einer Lenkachse zugeordneten Lenkaktuator zugeführt wird.

Des weiteren ist vorgesehen, dass die Bestimmung der Sollvorgabe in Abhängigkeit der momentanen Fahrzeuggeschwindigkeit erfolgt, wobei bei zunehmender Fahrzeuggeschwindigkeit oder ab einem bestimmten Schwellenwert die Sollvorgabe betragsmäßig reduziert und/oder einen Wert entsprechend einem Radlenkwinkel von 0° annimmt.

In Kombination hierzu ist es von Vorteil, dass die Bestimmung der Sollvorgabe zusätzlich die Geometriedaten des Fahrzeuggespanns oder eines Fahrzeugwagens, insbesondere der Achs- und Radstandsinformationen berücksichtigt.

Als weitere vorteilhafte Weiterentwicklung des erfindungsgemäßen Verfahrens zum Betrieb einer Mehrachslenkungsanlage ist vorgesehen, dass die Bestimmung der Sollvorgabe derart erfolgt, dass die von dem Führungsfahrzeug entsprechend dem Lenkwinkel und der Geometrie des Führungsfahrzeugs vorgegebene innere Kreisbahn von wenigstens einem nachfolgenden Fahrzeugwagen nicht geschnitten wird.

Weitere Einzelheiten und Vorteile der Erfindung ergeben sich aus den nachfolgenden Figurenbeschreibungen und den beigefügten Zeichnungen, in denen mehrere Ausführungsformen und Weiterentwicklungen gezeigt sind.

Fig. 1    eine schematische Darstellung einer Mehrachslenkungsanlage in einem Fahrzeuggespann am Beispiel eines Mehrgelenkomnibusses.

Fig. 2    eine schematische Darstellung zu einem verfahrensgemäßen Betrieb einer Mehrachslenkungsanlage zur Verdeutlichung von geometrischen Größen am Beispiel eines Mehrgelenkomnibusses.

Fig. 3    eine schematische Darstellung zu einem verfahrensgemäßen Betrieb einer Mehrachslenkungsanlage in einem Fahrzeuggespann.

Bezugszeichenliste

| 1 | Fahrzeuggespann |
|---|---|
| 2a, 2b, 2c | Fahrzeugwagen |
| 3a, 3b, 3c | Lenkaktuator |
| 4 | Lenkwinkelsensor |
| 5a, 5b | Knickwinkelsensor |
| 6 | Lenkachse |

(fortgesetzt)

| 7a, 7b | Gelenk |
|---|---|
| 8a, 8b, 8c | Steuereinheit |
| 9, 10 | Signalverbindung |
| 11 | Gelenkte Räder |
| $\alpha i$, $\alpha a$ | Lenkwinkel, (innerer, äußerer) |
| $\beta 1a$, $\beta 1i$, $\beta 2a$, $\beta 2i$ | Radlenkwinkel (innerer, äußerer) |
| $\omega 1$, $\omega 2$ | Knickwinkel |
| a,b,c,d,e | Achsabstände |
| K | Kreisbahn |

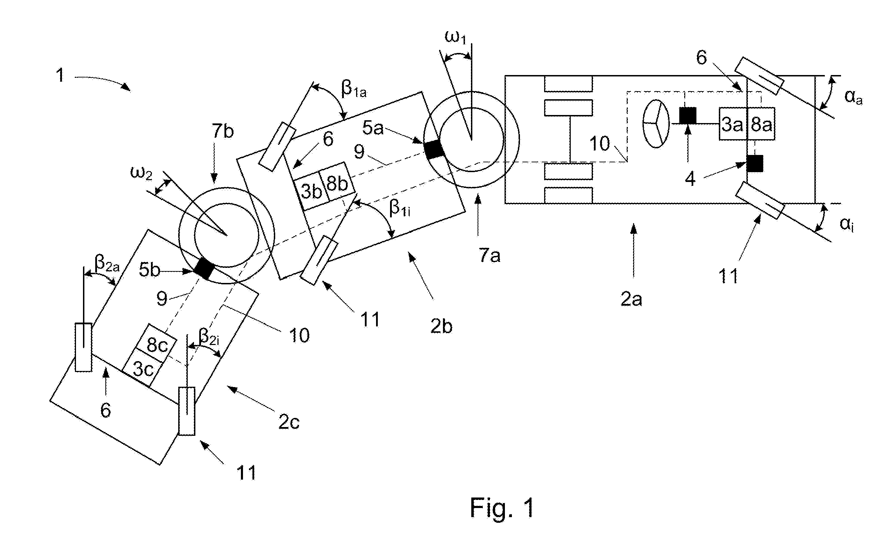

In Figur 1 ist schematisch eine Mehrachslenkungsanlage für ein Fahrzeuggespann 1 am Beispiel eines Gelenkomnibusses dargestellt. Der Gelenkomnibus besteht aus den Fahrzeugwagen 2a, 2b, 2c die mittels Drehtellern 7a und 7b miteinander verbunden sind. Die Stellung der Lenkwinkel $\alpha a$, $\alpha i$ an den vorderen gelenkten Rädern erfolgt im Wesentlichen nach Maßgabe des vom Fahrer des Fahrzeuggespanns mittels einer Lenkhandhabe vorgegebenen Fahrrichtungswunsches. Der Lenkaktuator 3a kann dabei ein herkömmliches Lenksystem in hydraulischer oder elektrohydraulischer Ausführung sein oder als ein so genanntes Überlagerungslenkgetriebe zur gesteuerten Überlagerung eines Lenkwinkels mit einem zusätzlichen Lenkwinkel ausgeführt sein. Der tatsächlich gestellte Lenkwinkel oder die Lenkwinkelvorgabe wird dabei mittels Lenkwinkelsensoren 4, die an der Lenkwelle oder am Lenkstockhebel angeordnet sind, detektiert. Diese Information wird der Steuereinheit 8a zugeführt und kann nebengeordneten Steuereinheiten 8b, 8c mittels der Signalverbindung 10 zur Verfügung gestellt werden.

An den Knickgelenken 7a, 7b sind Knickwinkelsensoren 5a, 5b angeordnet. Sie dienen zur Erfassung des Knickwinkels $\omega 1$, $\omega 2$ zwischen zwei Fahrzeugwagen 2a, 2b oder 2b, 2c. So erfasst der Knickwinkelsensor 5a den Winkel $\omega 1$ zwischen den Fahrzeugwagen 2a und 2b. Analog hierzu erfasst der Knickwinkelsensor 5b den Winkel w2 zwischen den Fahrzeugwagen 2b und 2c. Jeder Fahrzeugwagen weist eine Lenkachse 6 zur Radwinkelverstellung der mit den Lenkachsen verbunden Räder 11 einer lenkbaren Achse auf. Jeder Lenkachse 6 ist jeweils ein Lenkaktuator 3a, 3b, 3c zugeordnet. In diesem Beispiel ist der Lenkaktuator 3a als eine aus dem Stand der Technik bekannte Kugelmutter-Hydrolenkung ausgebildet. Die Lenkaktuatoren 3b und 3c sind als hydraulisches Hinterachslenksystem ausgeführt. Jedem Lenkaktuator 3a, 3b, 3c ist eine Steuereinheit 8 zugeordnet. Aufgabe der Steuereinheit ist es, Informationen über den momentanen Fahrzeugzustand einzusammeln und zu bewerten und in Folge davon eine Sollvorgabe für die einzelnen Lenkaktuator und damit den Radlenkwinkeln $\beta 1a$, $\beta 1i$, $\beta 2a$, $\beta 2i$ der mit den jeweiligen Lenkachsen 6 verbundenen gelenkten Rädern 11 zu ermitteln. Mittels den Signalverbindungen 9 ist die Datenübertragung der Knickwinkelinformation aus den Knickwinkelsensoren zur den Steuereinheiten 8 möglich. Ferner ist eine Signalverbindungsleitung 10 vorgesehen, die die Steuereinheiten untereinander verbindet. Dies ermöglicht einen Informationsaustausch der beteiligten Steuereinheiten untereinander. Die Signalverbindungen 9 und 10 sind bevorzugt als Bussystem ausgeführt, beispielsweise als CAN, MOST oder Flexray. Es können jedoch auch andere Überragungstechniken eingesetzt werden, z.B. drahtlose Verbindungen.

So ist es vorgesehen, die momentane Fahrgeschwindigkeitsinformation, die Informationen über die Achslasten und die Knickwinkel- und Lenkwinkelinformation, die aus den Knickwinkelsensoren 5a, 5b und den Lenkwinkelsensoren 4 stammen, zwischen den Steuereinheiten 8 ausgetauscht werden.

Anhand des im Folgenden beschriebenen Verfahrens soll beispielhaft die verfahrentechnische Lösung der Aufgabe der Erfindung verdeutlicht werden.

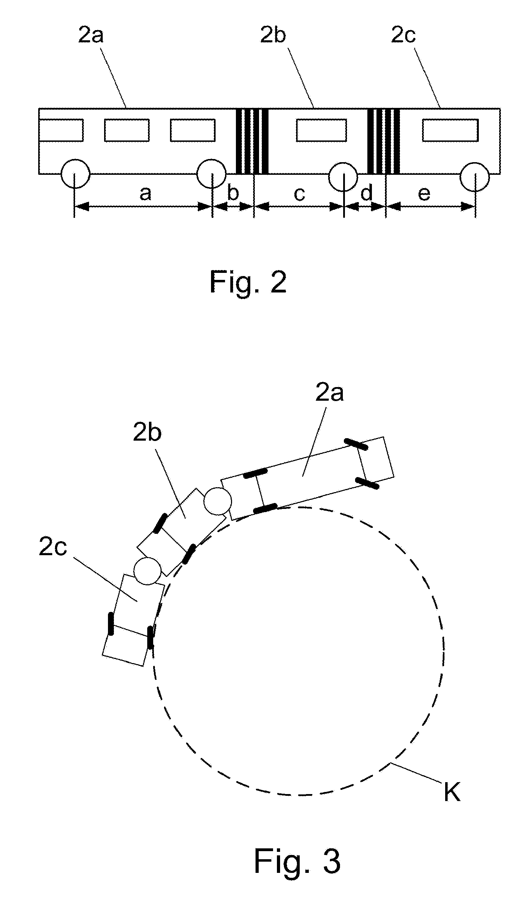

Damit die Fahrzeugwagen 2b, 2c besser dem durch das Führungsfahrzeug 2a vorgegebenen Lenkwinkel folgen können, ist im erfindungsgemäßen Verfahren vorgesehen, dass der aktuelle Lenkwinkel, das heißt die Lenkwinkelinformation betreffend des Lenkwinkels $\alpha a$, $\alpha i$ mittels den Lenkwinkelsensoren 4 durch das Steuergerät 8a erfasst wird. Der Lenkwinkelsensor 4 ist dabei in der Lenksäule des Lenksystems angeordnet oder befindet sich in Form eines Lineargebers an dem Lenkstockhebel der gelenkten Vorderachse des Führungsfahrzeuges 2a. Im Folgenden wird die Lenkwinkelinformation des Führungsfahrzeugs 2a den Steuereinheiten 8b, 8c zugeführt und als Maßgabe zur Bestimmung einer Sollvorgabe für die Lenkaktuatoren 3b, 3c verwendet. Die Sollvorgabe zur Stellung der Radlenkwinkel $\beta 1a$, $\beta 1i$, und $\beta 2a$, $\beta 2i$ mittels den Lenkaktuatoren 3b und 3c wird derart bestimmt, dass eine verbesserte Nachfolgung der Fahrzeugwagen 2b, 2c des dem Führungsfahrzeug 2a vorgegebenen Lenkwinkels bzw. Radius erreicht wird. In bevorzugter Weise erfolgt die Bestimmung der Sollvorgabe der Lenkaktuatoren 3b, 3c unter Verwendung der Achsabstände. In der Figur 2 sind beispielhaft die Achsabstände der Achsen a, b, c, d, e gezeigt. Im Wesentlichen erfolgt die Bestimmung der Sollvorgabe für den Radlenkwinkel am Beispiel des Fahrzeugwagens 2c unter Berücksichtigung der Ackermann'schen Beziehung für Radlenkwinkel β2i des inneren bzw. den Radlenkwinkel β2a des äußeren gelenkte Rades der Lenkachse 3c gemäß der Formel

$$\tan(\beta 2) = \frac{e - d}{\sqrt{\left(\dfrac{a}{\tan(\alpha)}\right)^2 + b^2 + c^2}} \, ,$$

wobei der Winkel β2 hier analog zu den Radlenkwinkel β2i, β2a und der Winkel α analog zu den Radlenkwinkel αi, αa gemäß der Ackermann- Beziehung sehen ist. In einer weiteren besonders bevorzugten Ausführungsform ist vorgesehen, dass jede Steuereinheit 8b, 8c den aktuellen Knickwinkel am Drehteller, d.h. die Knickwinkelinformation erfasst und im wesentlichen als Maßgabe zur Bestimmung der durch die Lenkaktuatoren 8b und 8c gestellten Solllenkwinkel β1a, β1i, und β2a, β2i verwendet.

Gemäß der Figur 3 sieht eine Weiterentwicklung des erfindungsgemäßen Verfahrens vor, die Sollvorgabe der Radlenkwinkel derart vorzunehmen, dass eine vom Führungsfahrzeug 2a vorgegebenen kurveninnere Kreisbahn K, die im wesentlichen vom Lenkwinkel an den Vorderrädern und der Stellung der Hinterachse abhängt, nicht durch einen oder in idealer Weise allen nachfolgenden Fahrzeugwagen 2b, 2c des Fahrzeuggespanns geschnitten wird. Dieses Verhalten kann auch dadurch charakterisiert werden, dass die Projektion des eingenommenen Fahrraums eines der nachfolgenden Fahrzeugwagen keine Überschneidung mit der Kreisbahn K aufweist. Dies hat den Vorteil, dass der Führer des Fahrzeuggespanns davon ausgehen kann, dass, keiner der nachfolgenden Fahrzeugwagen die "Kurve schneidet" und damit Personen- und/oder Sachschäden vermieden werden können. Dies ist besonders relevant hinsichtlich der Tatsache, dass der durch die Rückspiegel des Führungsfahrzeugs observierbare Raum nachfolgende Fahrzeugwagen in Kurven unzureichend erfassen kann.

In einer weiteren Ausgestaltung des erfindungsgemäßen Verfahrens ist vorgesehen, die Fahrzeuggeschwindigkeitsinformation zu verwenden. Diese kann von der Steuereinheit 8a gesendet und von den Steuereinheiten 8b, 8c empfangen werden oder autark, für jeden Fahrzeugwagen mittels geeigneter Sensoren zur Erfassung von Raddrehzahlen des jeweiligen Fahrzeugwagens durch eine der Steuereinheit 8a, 8b, 8c bestimmt werden.


**Patentansprüche**

1.    Mehrachslenkungsanlage für ein Fahrzeuggespann beinhaltend wenigstens zwei Fahrzeugwagen (2a, 2b), (2b, 2c) und wenigstens ein Gelenk (7a, 7b) zur Verkoppelung zweier Fahrzeugwagen wobei wenigstens zwei Fahrzeugwagen jeweils eine Lenkachse (6) zur Radwinkelverstellung von mit der Lenkachse (6) in Wirkverbindung stehenden gelenkten Räder (11) aufweisen,
**dadurch gekennzeichnet, dass** jeder Lenkachse (6) ein Lenkaktuator (3a, 3b, 3c) zur Radwinkelverstellung und eine Steuereinheit (8a, 8b, 8c) zur Steuerung und/oder Regelung der Lenkaktuatoren (3a, 3b, 3c) zugeordnet ist.

2.    Mehrachslenkungsanlage nach Anspruch 1, **dadurch gekennzeichnet, dass** keine der Lenkaktuatoren (3a, 3b, 3c) eine mechanisch und/oder pneumatisch und/oder hydraulisch wirkende Verbindung zur Radwinkelverstellung zu einem einer anderen Lenkachse (6) zugeordneten Lenkaktuator (3a, 3b, 3c) aufweist.

3.    Mehrachslenkungsanlage nach Anspruch 1 oder 2, **dadurch gekennzeichnet, dass** Mittel zur Erfassung eines vom Führer des Fahrzeuggespanns beeinflussbaren Lenkwinkels (αi, αa) und Mittel zur Zuführung der Lenkwinkelinformation an eine Steuereinheit (8a, 8b, 8c) vorgesehen sind.

4.    Mehrachslenkungsanlage nach Anspruch 1, 2 oder 3, **dadurch gekennzeichnet, dass** Mittel zur Erfassung eines Knickwinkels (ω1, ω2) zwischen zwei Fahrzeugwagen (2a, 2b), (2b, 2c) und Mittel zur Zuführung der Knickwinkelinformation an wenigstens eine Steuereinheit (8a, 8b, 8c) vorgesehen sind.

5.    Mehrachslenkungsanlage nach Anspruch 4, **dadurch gekennzeichnet dass** die Mittel zur Erfassung des Knickwinkels (ω1, ω2), insbesondere ein Winkelsensor (5a,5b), im Wirkbereich des Gelenks (7a, 7b) angeordnet sind.

6.    Mehrachslenkungsanlage nach Anspruch 5, **dadurch gekennzeichnet, dass** an wenigstens einem der Lenkaktuatoren (3a, 3b, 3c) oder im Wirkbereich einer dem Lenkaktuator zugeordneten Lenkachse (6) Mittel zur Erkennung einer Funktionsstörung des entsprechenden Lenkaktuators, insbesondere Druck- Bewegungs- oder Positionssensoren vorgesehen sind.

7. Mehrachslenkungsanlage nach Anspruch 5, **dadurch gekennzeichnet, dass** wenigstens ein Lenkaktuator (8b, 8c) Mittel zur Aktivierung und Aufrechterhaltung eines Notlaufbetriebs im Falle einer erkannten Funktionsstörung aufweist.

8. Mehrachslenkungsanlage nach Anspruch 7, **dadurch gekennzeichnet, dass** der Notlaufbetrieb Mittel zur Zentrierung der mit einer Lenkachse 6 verbunden gelenkten Rädern (11) in Geradeausstellung, entsprechend einem Radlenkwinkel ($\beta$1a, $\beta$1i), ($\beta$2a, $\beta$2i) von etwa 0°, vorsieht.

9. Verfahren für den Betrieb einer Mehrachslenkungsanlage mit den Merkmalen des Anspruchs 1, **dadurch gekennzeichnet, dass** die Sollvorgabe für die Radlenkwinkel ($\beta$1a, $\beta$1i), ($\beta$2a, $\beta$2i) der mit einer Lenkachse verbundenen gelenkten Räder nach Maßgabe der Lenkwinkelinformation erfolgt, wobei die Bestimmung der Sollvorgabe in einer Steuereinheit erfolgt oder die Sollvorgabe einer Steuereinheit zugeführt wird und nach deren Maßgabe eine dem Soll- Radlenkwinkel ($\beta$1a, $\beta$1i), ($\beta$2a, $\beta$2i) entsprechende Stellgröße ermittelt wird und einem einer Lenkachse (6) zugeordneten Lenkaktuator (3a, 3b) zugeführt wird.

10. Verfahren für den Betrieb einer Mehrachslenkungsanlage mit den Merkmalen des Anspruchs 1, **dadurch gekennzeichnet, dass** die Sollvorgabe für die Radlenkwinkel ($\beta$1a, $\beta$1i), ($\beta$2a, $\beta$2i) der mit einer Lenkachse verbundenen gelenkten Räder im nach Maßgabe der Knickwinkelinformation erfolgt, wobei die Bestimmung der Sollvorgabe in einer Steuereinheit erfolgt oder die Sollvorgabe einer Steuereinheit zugeführt wird und nach deren Maßgabe eine dem Soll- Radlenkwinkel ($\beta$1a, $\beta$1i), ($\beta$2a, $\beta$2i) entsprechende Stellgröße ermittelt wird und einem einer Lenkachse (6) zugeordneten Lenkaktuator (3a, 3b) zugeführt wird.

11. Verfahren zum Betrieb einer Mehrachslenkungsanlage nach einem der vorhergehenden Ansprüche 9 oder 10, **dadurch gekennzeichnet, dass** die Bestimmung der Sollvorgabe in Abhängigkeit der momentanen Fahrzeuggeschwindigkeit erfolgt, wobei bei zunehmender Fahrzeuggeschwindigkeit oder ab einem bestimmten Schwellenwert die Sollvorgabe betragsmäßig reduziert und/oder einen Wert entsprechend einem Radlenkwinkel ($\beta$1a, $\beta$1i), ($\beta$2a, $\beta$2i) von 0° annimmt.

12. Verfahren zum Betrieb einer Mehrachslenkungsanlage nach einem der vorhergehenden Ansprüche 9 , 10 oder 11, **dadurch gekennzeichnet, dass** die Bestimmung der Sollvorgabe zusätzlich die Geometriedaten des Fahrzeuggespanns oder eines Fahrzeugwagens, insbesondere der Achs- und Radstandsinformationen berücksichtigt.

13. Verfahren zum Betrieb einer Mehrachslenkungsanlage nach einem der vorhergehenden Ansprüche 9 oder 10, **dadurch gekennzeichnet, dass** die Bestimmung der Sollvorgabe derart erfolgt, dass die von dem Führungsfahrzeug (2a) entsprechend dem Lenkwinkel ($\alpha$i, $\alpha$a) und der Geometrie des Führungsfahrzeugs vorgegebene innere Kreisbahn (K) von wenigstens einem nachfolgenden Fahrzeugwagen nicht geschnitten wird.

Fig. 1

EP 1 847 443 A2

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3707700 A1
- DE 19510208 A1